# EUROPEAN PATENT APPLICATION

(11) **EP 3 819 280 A1**
(43) Date of publication of application: **12.05.2021**
(21) Application number: 19382969.4
(22) Date of filing: 06.11.2019
(51) Int. Cl.: C04B 41/00, F24H 9/00, F23D 14/14, C04B 35/565, C04B 35/571, C04B 35/626, C04B 35/634, C04B 35/80

(54) **CONTINUOUS COMPOSITE SURFACES AND BURNER SURFACES**

(71) Applicant: ORKLI, S. COOP., 20240 Ordizia (Gipuzkoa) (ES)
(72) Inventor: BORONAT ELIZALDE, Marco, E-20240 Ordizia, Gipuzkoa (ES); GONZÁLEZ SALVADOR, Francisco Javier, E-20240 Ordizia, Gipuzkoa (ES); HERNÁNDEZ CONDE, Iñigo, E-20240 Ordizia, Gipuzkoa (ES); MOTZ, Günter, 95447 Bayreuth (DE); KRENKEL, Walter, 95447 Bayreuth (DE); BARROSO, Gilvan, 95447 Bayreuth (DE); KNAUER, Michael, 95447 Bayreuth (DE)
(74) Representative: ABG Intellectual Property Law, S.L.

(57) **Abstract**

The present invention refers to a continuous composite surface A, a continuous composite surface B, a burner surface, a burner assembly and a method for the preparation of a continuous composite surface A and B, a method for the preparation of a burner surface, the use of a burner surface and the use of a burner assembly. A method for the preparation of a continuous composite surface A comprising the steps of:

i) providing a nonwoven layer comprising ceramic fibers and at least one polymeric binder;

ii) heating said nonwoven layer obtained in step (i) at a temperature high enough to stabilize said at least one polymeric binder from said nonwoven layer to obtain a nonwoven fabric;

iii) infiltrating the nonwoven fabric obtained in step (ii) with a solution comprising at least one preceramic polymer to obtain an infiltrated nonwoven fabric; wherein the preceramic polymer infiltrates the nonwoven fabric through all its thickness; and is preferably a silazane, and

iv) heating the infiltrated nonwoven fabric obtained in step (iii) at a temperature high enough to stabilize the preceramic polymer to obtain a continuous composite surface A.

## Description

### FIELD OF THE INVENTION

The present invention relates to the area of burner surfaces. More specifically, the present invention relates to a continuous composite surface, a burner surface, a burner assembly, methods for preparing the same and their uses.

### BACKGROUND

Ceramic materials have good thermal properties and are useful for several applications wherein resistance to high temperatures is required, being common materials in the composition of burner surfaces together with metals. However, burner surfaces comprising ceramic and/or metal burner plates have deficiencies related to high pressure drop or high thermal mass that cause burner inefficiency, unwanted emissions such as NOₓ, and fragility. The use of ceramic fibers to create porous burner surfaces overcomes part of these issues.

Patent Application No. WO2006/071481A1 describes burner plates comprising a self-supporting substrate having perforations and comprising ceramic fibers and an inorganic oxide coating of inorganic oxide platelets. However, inorganic coatings comprising platelets reduce the porosity of the burner surface and increase its fragility.

Therefore, there is a clear need for new materials and burner surfaces with high quality, performance, strength and durability characteristics and reduced manufacturing cost.

### BRIEF DESCRIPTION OF THE INVENTION

The authors of the present invention have developed a continuous composite surface, a burner surface, a burner assembly and a method for the preparation of a continuous composite, a method for the preparation of a burner surface, the use of a burner surface and the use of a burner assembly.

In particular, it has been observed that a burner surface comprising the continuous composite surface of the present invention and perforations has surprisingly a structural integrity significantly improved over previous burners.

It has been observed that by infiltrating a nonwoven fabric obtained with a preceramic polymer and then heating said nonwoven fabric to obtain the continuous composite surface of the present invention, a burner comprising the continuous composite surface of the present invention has a higher resistance to oxidation during combustion cycles than previous burners and, consequently, an increased working life.

In addition, since the method for the preparation of a continuous composite surface of the present invention is a simple and inexpensive procedure, it can be applied for large-scale production of continuous composite surfaces and burner surfaces.

Therefore, a first aspect of the invention is directed to a continuous composite surface A, obtainable by the method comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the preceramic polymer infiltrates the nonwoven fabric through all its thickness; and
iv) heating the infiltrated nonwoven fabric obtained in step (iii) at a temperature high enough to stabilize the preceramic polymer to obtain a continuous composite surface A.

In a second aspect, the present invention is directed to a continuous composite surface B, obtainable by the method comprising the steps of
i) providing the continuous composite surface A as defined in the present invention; and
ii) heating the continuous composite surface A at a temperature of at least 300°C to obtain a continuous composite surface B.

In another aspect the present invention is directed to a burner surface obtainable by the method comprising the steps of
i) providing the continuous composite surface A or the continuous composite surface B as defined above; and
ii) perforating the continuous composite surface A or B to obtain a burner surface.

In a another aspect, the present invention is directed to a burner assembly comprising
- a housing having a plenum chamber;
- a gas inlet port connected to the housing; and
- the burner surface as defined above.

In a further aspect, the present invention is directed to a method for the preparation of a continuous composite surface A comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a preceramic polymer to obtain an infiltrated nonwoven fabric; wherein the preceramic polymer infiltrates the nonwoven fabric through all its thickness;
iv) heating the infiltrated nonwoven fabric obtained in step (iii) at a temperature high enough to stabilize the preceramic polymer to obtain a continuous composite surface A.

In an additional aspect, the present invention is directed to a method for the preparation of a continuous composite surface B comprising the steps of:
i) providing the continuous composite surface A of the invention; and
ii) heating the continuous composite surface A at a temperature of at least 300°C to obtain a continuous composite surface B.

In an additional aspect, the present invention is directed to a method for the preparation of a burner surface comprising the steps of:
i) providing the continuous composite surface A or B as defined above; and
ii) perforating the continuous composite surface A or B to obtain a burner surface.

In a further aspect, the present invention is directed to the use of a burner surface as defined above in boilers, water heaters and/or cooking burners.

In an even further aspect, the present invention is directed to the use of a burner assembly as defined above in boilers, water heaters and/or cooking burners.

### FIGURES

Figure 1: Scanning electron microscopy micrograph of a continuous composite surface.
Figure 2: Scanning electron microscopy micrograph of a lateral section of the continuous composite surface.
Figure 3: Image of a burner surface.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Continuous composite surface A

As defined above, a first aspect of the invention is directed to a continuous composite surface A, obtainable by the method comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the solution comprising at least one preceramic polymer infiltrates the nonwoven fabric through all its thickness; and
iv) heating the infiltrated nonwoven fabric obtained in step (iii) at a temperature high enough to stabilize the preceramic polymer to obtain a continuous composite surface A.

In the context of the present invention, the expression "composite surface" refers to a surface made from at least two constituent materials with significantly different physical or chemical properties such as ceramic fibers and at least a binder, that when combined produce a material with different characteristics from its individual components. In the present invention, the composite material comprises ceramic fibers and at least a binder. In a particular embodiment, the ceramic fibers are a filler. Additionally, in the context of the present invention the term "continuous" in the expression "continuous composite surface" refers to a surface that does not comprise apertures, perforations, holes, openings, apertures and/or slits such as those made by any of laser, pin, die, punch, hydro jet perforation techniques and combination thereof. Said continuous composite surface may be porous. In a particular embodiment, the continuous composite surface is porous.

In the context of the present invention, the expression "ceramic fibers" refers to fibers of ceramic materials such as ceramic oxides, non-oxide ceramics or combinations thereof. Non-limiting examples of "ceramic oxides" are alumina, alumina-silica, alumina-boria-silica, aluminum borosilicate, alumina-mullite, silica, zirconia, zirconia-silica, titania, titania-silica, rare earth oxides or a combination thereof. Non-limiting examples of "non-oxide ceramics" are silicon carbide, silicon carbonitride, silicon oxycarbide, silicon titanium oxycarbide, silicon nitride, aluminum nitride, silicon titanium, silicon alumina nitride or a combination thereof.

### Step (i)

In the present invention the continuous composite surface is obtainable by the method described above that comprises a step (i) of providing a nonwoven layer comprising ceramic fibers and at least one polymeric binder.

In a particular embodiment, the nonwoven layer of the invention is obtained by pulp molding or by wet-laid techniques.

In a particular embodiment, the nonwoven layer of the invention is obtained by a wet-laid method comprising the following steps:
(a) providing a dispersion comprising
   a. ceramic fibers;
   b. at least one polymeric binder; and
   c. a solvent;
(b) depositing the dispersion on a wire screen and drying.

In a particular embodiment, the nonwoven layer of the invention is obtained by a pulp molding method comprising the following steps:
(a) providing a dispersion comprising
   a. ceramic fibers;
   b. at least one polymeric binder; and
   c. a solvent;
(b) suctioning said dispersion through a frame to obtain a nonwoven layer.

### Step (a) providing a dispersion

Step (a) of providing a dispersion is a step that may be part of a wet-laid or a pulp-molding method to obtain a nonwoven layer.

Non-limiting examples of solvents suitable for the dispersion of step (a) of the present invention are methanol, 2-propanol, chloroform, toluene, anisole, cyclohexane, dimethyl formamide, methanol, dichloromethane, trichloroethane, water, acetone, ethyl acetate, N-methyl-2-pyrrolidone and mixtures thereof.ln a particular embodiment, the dispersion of step (a) comprises a solvent selected from methanol, ethanol and water; preferably water. In a particular embodiment, the dispersion of step (a) has a viscosity between 1 Cps and 10000 Cps, preferably of between 10 and 5000 Cps, more preferably of between 50 and 2000 Cps, even more preferably between 50 and 1000 Cps. In a particular embodiment, the dispersion of step (a) is stable.

The dispersion provided in step (a) may be prepared by dispersing the ceramic fibers and the at least one polymeric binder and, optionally, other additives, in a suitable solvent by applying energy via mechanical methods known in the art for example by means of dispersers, agitators or by ultrasonic baths and or probes. Other alternatives known in the art to prepare stable dispersions that are suitable for the invention include the addition of surface tension control additives (surfactants) to the dispersion, or modification of the ceramic fibers surface by bound or unbound ligand molecules. The dispersion quality may be assessed by the stability of the dispersions during a certain time without flocculation or precipitation. In particular, the ceramic fibers should not aggregate and flocculate in the time frame of the fabrication process, i.e.: from several minutes to hours. Turbidimetry or nephelometry and/or dynamic light scattering can be used for monitoring the stability of the dispersions.

In a particular embodiment, the dispersion of step (a) further comprises at least one additive; preferably at least one colloidal additive; more preferably at least one colloidal additive selected from colloidal silica, colloidal alumina and combinations thereof.

In some embodiments, the dispersion of step (a) further comprises one or more additive admixtures. In some embodiments, the one or more additive admixtures are chosen from thickeners, surfactants, and/or ceramic precursors.

In a particular embodiment, the dispersion of step (a) further comprises at least one thickener. In the context of the present invention, the term "thickener" refers to a compound that increases the density of the dispersion of step (a). Suitable thickeners according to the present invention include colloidal silica, colloidal alumina, sodium alginate (E-401), potassium alginate (E-402), ammonium alginate (E-403), calcium alginate (E-404) and mixtures thereof.

In a particular embodiment, the dispersion of step (a) further comprises at least one surfactant. Suitable surfactants include anionic surfactants, cationic surfactants, nonionic surfactants, amphoteric surfactants or combinations thereof. Exemplary of the anionic surfactant are carboxylic acid, sulfuric acid ester, sulfonic acid, and phosphoric acid ester type surfactants. Exemplary of the cationic surfactant are amine salt, primary amine salt, secondary amine salt, tertiary amine salt, and Quaternary amine salt type surfactants. Exemplary of the nonionic surfactant are ester, ester-ether, and ether type surfactants.

Exemplary of the amphoteric surfactant are amino acid and sulfo-betaine type surfactants.

In a particular embodiment, the dispersion of step (a) further comprises metal fibers.

In a more particular embodiment, the dispersion of step (a) further comprises metal fibers selected from iron-based and nickel-based alloys fibers.

In a more particular embodiment, the dispersion of step (a) is at room temperature.

In the context of the present invention, the expression "room temperature" refers to a temperature between 15 degrees (°C) and 25 °C.

### Step (b) suctioning

Step (b) of suctioning is a step that is part of a pulp-molding method to obtain a nonwoven layer.

In the context of the present invention, the term "frame" refers to a pulp molding mold, particularly to a male half of a pulp molding mold related to the "pulp molding technology" known in the art. A pulp molding mold suitable for the present invention comprises two halves: a male half (convex) and a female half (concave). One of the halves of said suitable pulp molding mold comprises perforations and is suitable for suctioning a dispersion comprising ceramic fibers, at least one polymeric binder and a solvent and to create a nonwoven layer comprising the ceramic fibers and the at least one polymeric binder on the external surface of said half pulp molding mold; preferably the male half. Said pulp molding mold can be used with or without a filter. Said filter is particularly a metallic mesh filter. In the present invention, neither the male half nor the female half have protrusions or pins in their surface. Additionally, the pulp molding mold used can be adapted to create a flat or 3D shaped nonwoven layers with different shapes.

In a particular embodiment, the frame has protrusions.

In a particular embodiment, the frame of step (b) has no protrusions; preferably the frame of step (b) has no protrusions on its external surface.

In a particular embodiment, the frame of step (b) comprises perforations. Said perforations have preferably diameters over 5 microns.

In a particular embodiment, the frame of step (b) is a pulp molding mold; preferably a half of a pulp molding mold; more preferably a male half of a pulp molding mold. In a particular embodiment, the frame of step (b) is a half of a pulp molding mold; preferably a male half of a pulp molding mold; wherein said half of a pulp molding mold does not comprise protrusions; preferably on its external surface.

In a particular embodiment, the suctioning of the dispersion through a frame of step (b) is performed during a period of time between 1 sec and 300 sec, preferably between 5 and 120 sec, more preferably between 5 and 30 sec; even more preferably between 2 and 30 sec.

In a particular embodiment, the suctioning of the dispersion through a frame of step (b) is performed at a difference of pressure between 1 mbar and 10 bar, preferably between 2 mbar and 1 bar, more preferably between 5 mbar and 200 mbar.

In a particular embodiment, the ceramic fibers of the method of the invention are selected from commercially available ceramic fibers. Non-limiting examples of commercially available ceramic fibers include glass fibers, quartz fibers, aluminum borosilicate fibers, silica fibers, non-oxide fibers (for example, silicon carbide, silicon carbonitride, silicon oxycarbide, silicon titanium oxycarbide), as well as those ceramic oxide fibers marketed by 3M Company (Saint Paul, MN) under the trade designation "NEXTEL" (for example, "NEXTEL 312", "NEXTEL 440", "NEXTEL 550", "NEXTEL 610", "NEXTEL 650", and "NEXTEL 720"), by BelChem Fiber Materials GmbH (Freiberg, Germany) under the trade designation "BELCOTEX", by COI Ceramics Company under the trade designation of "NICALON FIBER" (for example, "NICALON", "HI-NICALON" and "Hi-Nicalon Type S"), by UBE Industries under the trade designation of "Tyranno fiber" or by Hitco Carbon Composites, Inc. (Gardena, CA) under the trade designation "REFRASIL". In a more particular embodiment, the ceramic fibers of step (i) are selected from silicon carbide (SiC) fibers, silicon carbonitride (SiCN) fibers, alumina (Al₂O₃) fibers, alumina-mullite fibers, aluminum borosilicate fibers and silica (SiO₂) fibers; preferably selected from silicon carbide (SiC) fibers, silicon carbonitride (SiCN) fibers, aluminium borosilicate fibers and silica fibers (SiO2); more preferably silicon carbide (SiC) fibers.

In a particular embodiment, the ceramic fibers of step (i) are chopped fibers.

In a particular embodiment, the ceramic fibers of step (i) are in the form of individual fibers, bundles, yarns or a fabric; preferably in the form of individual fibers. Non-limiting examples of ceramic fibers suitable for the present invention include straight, crimped or roving fibers.

In a particular embodiment, the ceramic fibers of step (i) have diameters between 1 and 50 microns; preferably between 5 and 40 microns; more preferably between 10 and 30 microns; even more preferably between 6 and 26 microns. In a particular embodiment, the ceramic fibers of step (i) have lengths between 0.1 and 50 mm; preferably between 0.5 and 30 mm; more preferably between 1 and 25 mm.

In the context of the present invention, the expressions "fiber thickness" or "fiber diameter" are synonyms. In the context of the present invention the expression "fiber diameter" or "fiber diameters" relates to the shorter dimension of a fiber. In the context of the present invention the expression "fiber length" or "fiber lengths" relates to the longer dimension of a fiber.

In a particular embodiment, the ceramic fibers of step (i) have aspect ratios of between 200 and 1000, preferably between 300 and 800, more preferably between 400 and 600. In the context of the present invention, the expression "aspect ratio" relates to the ratio of the fiber sizes in different dimensions. As a non-limiting example the aspect ratio of a fiber is the ratio of its longer side or its length to its shorter side or its diameter or thickness, i.e. if a fiber has a length of 40000 microns and a diameter of 20 microns, its aspect ratio is 2000.

In a particular embodiment, the ceramic fibers of step (i) are uncoated.

In a particular embodiment, the ceramic fibers of step (i) are coated. In a more particular embodiment, the ceramic fibers of step (i) are coated with an organic or an inorganic film.

In a particular embodiment, the nonwoven layer of step (i) comprises ceramic fibers as a first filler, and a second filler, preferably a second ceramic filler; preferably wherein the first filler is in greater amount that the second filler; more preferably wherein the first filler and the second filler are in at least a 2:1 ratio. In a more particular embodiment said second filler is selected from ceramic fibers or ceramic particles; preferably ceramic particles.

In another particular embodiment, the ceramic fibers or ceramic particles of the present invention are hollow.

In a particular embodiment, the ceramic fibers of step (i) are the major filler; preferably the only filler.

In a particular embodiment, the nonwoven layer of step (i) comprises ceramic fibers and the at least one polymeric binder in a ratio of at least 2:1; preferably of at least 3:1; more preferably of at least 5:1, even more preferably of at least 10: 1.

In a more particular embodiment, the material of the second ceramic filler of step (i) is selected from silicon carbide (SiC), silicon carbonitride (SiCN), alumina (Al₂O₃), alumina-mullite, aluminum borosilicate and silica (SiO₂); preferably selected from silicon carbide (SiC), silicon carbonitride (SiCN), aluminium borosilicate and silica (SiO₂); more preferably silicon carbide (SiC) or silica (SiO₂). In a particular embodiment, the nonwoven layer of step (i) comprises a dispersant.

The authors of the present invention believe that using ceramic fibers improves the durability and resistance to high temperatures of the continuous composite surface of the present invention and reduces its thermal mass over using other materials.

In the context of the present invention, the term "binder" refers to a substance that helps the ceramic fibers to stick together by adhesion or cohesion.

In a particular embodiment, the at least one polymeric binder of step (i) is a carbohydrate; preferably a monomeric or polymeric carbohydrate; more preferably cellulose or dextrin; even more preferably cellulose.

In a particular embodiment, the at least one polymeric binder of step (i) is a polymer selected from a polymeric carbohydrate, thermoplastic polymer, polyacrylate, polyurethane, epoxy resins, phenol resins, thermo curing resins, light sensitive resins, polyester resins and/or a combination thereof.

In another particular embodiment, the at least one polymeric binder of step (i) is a polymer selected from a polymeric carbohydrate, thermoplastic polymer, polyacrylate, polyurethane, phenolic resins, thermo curing resins, light sensitive resins, polyester resins and/or a combination thereof; preferably selected from a monomeric carbohydrate, polymeric carbohydrate and thermoplastic polymer.

In a particular embodiment, the at least one polymeric binder of step (i) is a thermoplastic polymer selected from poly(methyl methacrylate) (PMMA), polycarbonate (PC), polystyrene (PS), polypropylene (PP), polyethylene (PE), polyglycolide (PGA), poly(propylenefumarate) (PPF), polycyanoacrylate (PCA), polycaprolactone (PCL), poly(glycerol sebacate) (PGS), poly(glycerol sebacate acrylate) (PGSA), polyvinylidenefuoride (PVDF), polyvinylidene chloride (PVDC), polyethylene terephthalate (PET), polybutylene therephtalate (PBT), polyphenylene oxide (PPO), polyimide (PI), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated poly ethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate (PVA), polyvinylidene chloride (PVDC), styrene acrylonitrile (SAN), polyetherketones (PEEK), polyvinylalcohol (PVA), polyhydroxyethylmethacrylate polyvinylalcohol (PVA), polyhydroxyethylmethacrylate (PHEMA), poly(N-isopropylacrylamide) (PNIPAAm) and mixtures thereof.

In a particular embodiment, the at least one polymeric binder of step (i) is a vinyl polymer selected from polyvinyl chloride (PVC), poly(vinyl acetate) and polyvinyl alcohol (PVA); preferably polyvinyl alcohol (PVA). In a particular embodiment, the at least one polymeric binder of step (i) is selected from polyvinyl alcohol (PVA), polyimide (PI), dextrin and cellulose; preferably selected from polyvinyl alcohol (PVA), polyimide (PI) and dextrin; more preferably polyvinyl alcohol (PVA).

In a particular embodiment, the at least one polymeric binder of step (i) is not in the form of beads. In a particular embodiment, the at least one polymeric binder of step (i) is a polymer fiber.

Without being bound to any theory in particular, the authors of the present invention observe that the use of a first binder improves the stability of the nonwoven layer making it a self-supporting layer.

### Step (ii) heating

In the present invention, the continuous composite surface is obtainable by the method described above that comprises a step (ii) of heating said nonwoven layer obtained in step (i) at a temperature high enough to stabilize said at least one polymeric binder from said nonwoven layer to obtain a nonwoven fabric. In the context of the present invention the expression "nonwoven layer" refers to a layer comprising physical entangling ceramic fibers and a polymeric binder that helps said ceramic fibers to stick together by adhesion or cohesion.

In a particular embodiment, the nonwoven layer of step (ii) has a thickness between 0.1 and 50 mm; preferably between 0.5 and 40 mm; more preferably between 1 and 10 mm.

In a particular embodiment, the nonwoven layer of step (ii) comprises between 1 and 70 wt% of the at least one polymeric binder; preferably between 10 and 60 wt%; more preferably around 50 wt%. In a particular embodiment, the at least one polymeric binder is a polymeric carbohydrate, preferably cellulose, and the nonwoven layer of step (ii) comprises between 1 and 70 wt% of said at least one polymeric binder; preferably between 10 and 60 wt%; more preferably between 20 and 55 wt%; even more preferably around 50 wt%.

In a particular embodiment, the nonwoven layer has a 2D (i.e. flat) or a 3D shape; preferably a 3D shape. In more a particular embodiment, the nonwoven layer has a 2D (i.e. flat)

In an embodiment, the at least one polymeric binder is a polymeric carbohydrate, preferably cellulose. In an embodiment the nonwoven layer of step (ii) has a 3D shape and comprises between 1 and 70 wt% of said at least one polymeric binder; preferably between 10 and 60 wt%; more preferably between 20 and 55 wt%; even more preferably around 50 wt%.

It is believed that using a polymeric carbohydrate as a polymeric binder improves the dispersion of the fibers in the nonwoven layer and its homogeneity and thus, improves the durability and resistance to high temperatures of the continuous composite surface of the present invention.

In a particular embodiment, the nonwoven layer of step (ii) comprises an at least one polymeric binder weight percentage of between 1 and 20 wt%, preferably between 2 and 15 wt%; more preferably between 2 and 8 wt%; even more preferably between 3 and 6 wt%.

In a particular embodiment, the at least one polymeric binder is a thermoplastic polymer or a monomeric carbohydrate, preferably poly(vinyl alcohol)(PVA), polyimide (PI) or dextrin, and the nonwoven layer of step (ii) comprises between 1 and 20 wt% of said at least one polymeric binder; preferably between 2 and 15 wt%; more preferably between 2 and 8 wt%; even more preferably between 3 and 6 wt%.

The authors of the present invention have observed that when the at least one polymeric binder is a thermoplastic polymer or a monomeric carbohydrate, the quality of the nonwoven layer of step (ii) is improved, in particular if said nonwoven layer is flat. Moreover, the authors of the present invention have observed that when the at least one polymeric binder is a polymeric carbohydrate, the quality of the nonwoven layer of step (ii) is improved, in particular if said nonwoven layer has a 3D shape.

In a particular embodiment, the nonwoven layer of step (ii) comprises more weight percentage of ceramic fibers than of at least one polymeric binder.

In a particular embodiment, the nonwoven layer of step (ii) comprises ceramic fibers and the at least one polymeric binder in a ratio of at least 2:1; preferably of at least 3:1; more preferably of between 2:1 and 4:1.

In a particular embodiment, the at least one polymeric binder of the present invention is one polymeric binder.

In the context of the present invention, the term "stabilize" regarding the at least one polymeric binder of the nonwoven layer relates to chemically or physically stabilizing said at least one polymeric binder; particularly by curing said at least one polymer binder.

In a particular embodiment, the heating of step (ii) is performed at a temperature high enough to stabilize said at least one polymeric binder from said nonwoven layer to obtain a nonwoven fabric.

In another particular embodiment, the heating of step (ii) is performed at a temperature between 50 and 300 °C, preferably between 60 and 280°C, more preferably between 70 and 250°C; even more preferably between 80 and 200°C; even much more preferably under air. In a particular embodiment, the heating of step (ii) is performed during between 1 and 100 hours, preferably during between 5 and 50 hours, more preferably during between 10 and 20 hours. In a particular embodiment, the heating of step (ii) is performed at a vacuum level below 100 mbar, preferably between 2 and 50 mbar, more preferably between 5 and 30 mbar.

In a particular embodiment, the heating of step (ii) is performed in a furnace; preferably in a vacuum furnace; more preferably in a hot wall vacuum furnace; even more preferably in a chemical vapor deposition furnace.

In a more particular embodiment, the heating of step (ii) is performed at a temperature between 50°C and 300 °C, a pressure below 100 mbar and during between 5 and 50 hours in a hot wall vacuum furnace.

In a particular embodiment, the stabilization of the at least one polymeric binder of step (ii) is a thermal decomposition. Non-limiting examples of said thermal decomposition are: burning said at least one polymeric binder from said nonwoven layer or pyrolyzing said at least one polymeric binder from said nonwoven layer.

In the context of the present invention the expression, "nonwoven fabric" refers to a layer comprising physical entangling ceramic fibers.

In a particular embodiment, the nonwoven fabric of any of steps (ii), (iii) and (iv) has a thickness between 0.1 and 50 mm; preferably between 1 and 40 mm; more preferably between 2 and 10 mm.

In a particular embodiment, the nonwoven fabric of any of steps (ii), (iii) and (iv) or the continuous composite surface of step (v) is porous; preferably comprising pores wherein said pores are the void fraction created by the interstices among the ceramic fibers. In a particular embodiment, the nonwoven fabric of any of steps (ii), (iii) and (iv) or the continuous composite surface of step (iv) has porosity values between 70 and 99 %, preferably between 80 and 99%; more preferably between 90 and 99%. In the context of the present invention the expression "porosity" in relation with any one of the nonwoven layer, the nonwoven fabric, the continuous composite surface and the burner surface refers to a void fraction created by the pores or the interstices among the ceramic fibers and is a fraction of the volume of voids over the total volume expressed as a percentage between 0% and 100%. In addition, the porosity of the nonwoven layer, the nonwoven fabric, the continuous composite surface and/or the burner surface may be calculated by a liquid displacement method, like a water displacement method, as known in the art. Therefore, in the context of the present invention, the term "pore" in singular or plural refers to the interstices among the ceramic fibers in any one of the nonwoven layer, the nonwoven fabric, the continuous composite surface and the burner surface. Preferably, said pores have averaged diameters between 1 and 100 microns; preferably between 5 and 50 microns; more preferably between 10 and 40 microns.

### Step (iii) infiltrating

In the present invention, the continuous composite surface is obtainable by the method described above that comprises a step (iii) of infiltrating the nonwoven fabric obtained in step (ii) with a solution comprising at least one preceramic polymer to obtain an infiltrated nonwoven fabric; wherein the solution comprising at least one preceramic polymer infiltrates the nonwoven fabric through all its thickness.

In the context of the present invention the term "infiltrating" or "infiltration" relates to the introduction of a solution comprising at least one precursor such as a preceramic polymer into/within the nonwoven fabric, in particular into/within the voids and/or the interstices among the ceramic fibers of the nonwoven fabric (the solution passes into the pores or interstices of the nonwoven mat and impregnates the fibers of the nonwoven mat from one side to the other side).

In a particular embodiment, the solution comprising at least one preceramic polymer further of step (iii) comprises a solvent; wherein the solvent is an organic solvent not having a reactive group such as alcohol, aldehyde and/or acid. In a more particular embodiment, the solvent of the solution of step (iii) is selected from an alkane, benzine or ether; more particularly a solvent selected from n-butylether, benzine, n-hexane and n-heptane; preferably di-n-butylether (DBE). In a more particular embodiment, the solvent of the solution of step (iii) is petroleum benzene; preferably petroleum benzene with a CAS Number 64742-49-0.

In a particular embodiment, the solution of step (iii) further comprises a solvent wherein the solvent is between an 60 and a 99 wt.%; preferably between 70 and 95 wt.%; more preferably between 80 and 90 wt.%.

In a particular embodiment, the solution of step (iii) further comprises a polymer curing initiator; particularly a peroxide; more particularly a dicumyl peroxide.

In a particular embodiment, the preceramic polymer of step (iii) is selected from siloxane polymer, silazane polymer and carbosilane polymer. In a more particular embodiment, the preceramic polymer is a silazane polymer; particularly a silazane polymer comprising Si and N.

In a more particular embodiment, the solution comprising at least one preceramic polymer further of step (iii) further comprises a filler selected from silicon carbide (SiC), silicon carbonitride (SiCN), alumina (Al₂O₃), alumina-mullite, aluminum borosilicate and silica (SiO₂); preferably selected from silicon carbide (SiC), silicon carbonitride (SiCN), aluminium borosilicate and silica (SiO₂); more preferably silicon carbide (SiC) or silica (SiO₂); even more preferably silicon carbide (SiC) or pyrogenic silica (SiO₂).

In a particular embodiment, the solution comprising at least one preceramic polymer further of step (iii) further comprises a dispersant; particularly an acrylate copolymer.

In step (iii) the preceramic polymer infiltrates the nonwoven fabric through the thickness of the nonwoven fabric (i.e. from one side to the other side).

In a particular embodiment, the infiltration of the nonwoven fabric of step (iii) is performed by an infiltration technique.

The infiltration of step (iii) may be performed by a coating technique coupled with a suction technique. In a particular embodiment, the infiltration of step (iii) is performed by a coating technique coupled with a suction technique, wherein the coating technique is selected from blade coating, film transfer coating, curtain coating and spray coating; preferably by curtain coating or spray coating; more preferably by spray coating.

If a suction technique is used in step (iii) the suctioned solution comprising at least one preceramic polymer may be reused or recirculated.

In a more particular embodiment, the nonwoven fabric is infiltrated by dip coating the solution comprising the preceramic polymer.

In a more particular embodiment, the nonwoven fabric is infiltrated by spraying the solution comprising the preceramic polymer; particularly by spraying the solution comprising the preceramic polymer on both sizes of the nonwoven fabric.

In a more particular embodiment, the nonwoven fabric is infiltrated by spraying the solution comprising the preceramic polymer; preferably by using an airless spray gun. In a more particular embodiment, the nonwoven fabric is infiltrated by spraying the solution comprising the preceramic polymer to one side of the nonwoven fabric and suctioning the solution from the other side of the nonwoven fabric at the same time. In a more particular embodiment, the infiltration of the nonwoven fabric is performed by spray coating the nonwoven fabric while applying suction on the other side of the nonwoven fabric.

In a particular embodiment, solution comprising at least one preceramic polymer infiltrates homogeneously the nonwoven fabric through all its thickness. In particular, the preceramic polymer solution penetrates the nonwoven fabric from one side to the other (through all its depth).

In a particular embodiment, the infiltrated nonwoven fabric is dried; particularly is dried at room temperature (i.e. between 15 and 35 °C).

### Step (iv) heating

In the present invention, the continuous composite surface is obtainable by the method described above that comprises a step (iv) of heating the infiltrated nonwoven fabric obtained in step (iii) at a temperature high enough to stabilize the preceramic polymer to obtain a continuous composite surface A.

In the context of the present invention, the term "stabilize" regarding the preceramic polymer of step (iv) relates to chemically or physically stabilizing said preceramic polymer; particularly by curing said preceramic polymer.

In a particular embodiment, the heating of step (iv) is performed at a temperature high enough to cure said the preceramic polymer to obtain a continuous composite surface A.

In the context of the present invention the term "cure" relates to cross-linking polymer chains of the at least one polymeric binder or of the preceramic polymer used in the method of the present invention. The curing of the preceramic polymer used in the method of the present invention may be initiated by heat, by the addition of an additive, for example by the addition of dicumyl peroxide, or by both heat and the addition of an additive.

In a more particular embodiment, the heating of step (iv) of the infiltrated nonwoven fabric obtained in step (iii) at a temperature of between 50 and 300°C; particularly of between 60 and 290°C; more particularly of between 70 and 280°; even more particularly of between 80 and 250°. In a more particular embodiment, the heating of step (iv) of the infiltrated nonwoven fabric obtained in step (iii) at a temperature of between 50 and 200°C; particularly of between 80 and 150°C; more particularly of between 90 and 120°; even more particularly of about 110°C.

In a particular embodiment, the step (iv) of heating the infiltrated nonwoven fabric obtained in step (iii) is performed during between 0.1 and 5 hours; preferably during between 0.5 and 2 hours; more preferably during about 1 hour.

In a particular embodiment, the step (iv) of heating the infiltrated nonwoven fabric obtained in step (iii) is performed at atmospheric pressure; preferably at about 1 atm.

In a particular embodiment, the vapor deposition of step (iv) is performed in a furnace.

In a particular embodiment, the heating of step (iv) is performed under air.

In a particular embodiment, the heating of step (iv) is performed under an inert atmosphere; particularly under a nitrogen gas flow.

### Continuous composite surface B

An aspect of the present invention is directed to a continuous composite surface B obtainable by the method comprising the steps of
i) providing the continuous composite surface A of the present invention; and
ii) heating the continuous composite surface A at a temperature of at least 300°C to obtain a continuous composite surface B.

In the present invention, the continuous composite surface B is obtainable by the method described above that comprises a step (ii) of heating the continuous composite surface A of the present invention at a temperature of at least 300°C to obtain a continuous composite surface B.

In a particular embodiment, the step (ii) is performed at a temperature of at least 300°C to obtain a continuous composite surface B; preferably at a temperature of at least 500°C; more preferably at a temperature of at least 600°C; even more preferably at a temperature of between 700°C and 1100°C.

In a particular embodiment, the heating of step (ii) is performed at a temperature of between 300 and 700 °C; preferably of between 300 and 600 °C, more preferably between 400 and 500 °C.

In a particular embodiment, the heating of step (ii) is performed at a temperature between 600 and 1300 °C; preferably of between 700 and 1200 °C, more preferably between 800 and 1100°C; even more preferably of about 1000°C.

In a particular embodiment, the heating of step (ii) is performed during between 0.1 and 100 hours, preferably during between 0.5 and 50 hours, more preferably during between 0.6 and 5 hours; even more preferably of about 1 hour.

In a particular embodiment, the heating of step (ii) is performed at atmospheric pressure; preferably at about 1 atm.

In a particular embodiment, the heating of step (ii) is performed in a furnace.

In a particular embodiment, the heating of step (ii) is performed at a temperature about 500°C, at about 1 atm of pressure and during between 0.6 and 5 hours in a furnace and under nitrogen atmosphere.

In a particular embodiment, the heating of step (ii) is performed at a temperature about 1000°C, at about 1 atm of pressure and during between 0.6 and 5 hours in a furnace.

In a particular embodiment, the heating of step (ii) comprises two heating steps:
- a first heating step at a temperature between 300 and 700 °C; preferably of between 300 and 600 °C, more preferably between 400 and 500°C; and
- a second heating step a temperature between 600 and 1300 °C; preferably of between 700 and 1200 °C, more preferably between 800 and 1100°C; even more preferably of about 1000°C.

In a particular embodiment, the heating of step (ii) comprises two heating steps:
- a first heating step at a temperature between 300 and 500°C; and
- a second heating step a temperature between 700 and 1200 °C.

In a particular embodiment, the heating of step (ii) comprises two heating steps:
- a first heating step at a temperature of about 500°C; and
- a second heating step at a temperature of about 1000°C.

In a particular embodiment, the heating of step (ii) is performed under air.

In a particular embodiment, the heating of step (ii) is performed under an inert atmosphere; particularly under a nitrogen gas flow.

In a more particular embodiment, the optional heating of step (ii) pyrolyzes said at least one polymeric binder of the continuous composite surface A; wherein the at least one polymeric binder leaves a carbonaceous residue; preferably a pyrolytic carbon residue; more preferably between 1 and 60 wt% pyrolytic carbon residue of the initial at least one polymeric binder; preferably between 1.5 and 20 wt%; even more preferably between 2 and 5 wt%. In a more particular embodiment when the at least polymeric binder is poly(vinyl alcohol)(PVA) or dextrin, the carbonaceous residue left is below 20 wt% of the initial at least one polymeric binder; preferably below 10 wt%; more preferably below 5 wt%; even more preferably between 1 and 4 wt%. In a particular embodiment when the at least polymeric binder is polyimide, the carbonaceous residue left is below 70 wt% of the initial at least one polymeric binder; preferably between 20 and 70 wt%; more preferably between 30 and 60 wt%.

In the context of the present invention the term "pyrolyzing" refers to the thermal decomposition of organic materials in an inert atmosphere by pyrolysis that usually leaves pyrolytic carbon as residue.

Without being bound to any theory in particular, the authors of the present invention have observed that by pyrolyzing the at least one polymeric binder the properties of the continuous composite surface B are improved. Moreover, the authors have observed that by selecting the at least one polymeric binder the porosity of the continuous composite surface may be controlled.

The continuous composite surface B of the present invention may comprise a carbonaceous residue from the decomposition of the at least one polymeric binder. Said layer may be porous; wherein the pores are the ones left by the ceramic fibers interstices. The carbonaceous residue left by the at least one polymeric binder may join the ceramic fibers and may affect the porosity of the continuous composite surface B; in particular it may affect the shape and/or diameters of the pores.

In a particular embodiment, the continuous composite surface B comprises a carbonaceous residue; preferably pyrolytic carbon; preferably between 0.1 and 20 wt% of pyrolytic carbon; more preferably between 0.5 and 15 wt%; even more preferably between 1 and 10 wt%; even much more preferably between 1 and 5 wt%. In a more particular embodiment, the at least one polymeric binder is PVA; and the continuous composite surface B comprises between 0.1 and 10 wt% of pyrolytic carbon; preferably between 0.1 and 5 wt% of pyrolytic carbon; more preferably about a 2,5 wt% of pyrolytic carbon. In a more particular embodiment, the at least one polymeric binder is dextrin; and the continuous composite surface B comprises between 0.1 and 10 wt% of pyrolytic carbon; preferably between 0.1 and 5 wt% of pyrolytic carbon. In a more particular embodiment, the at least one polymeric binder is polyimide; and the continuous composite surface B comprises between 0.1 and 20 wt% of pyrolytic carbon; preferably between 5 and 20 wt% of pyrolytic carbon. In a more particular embodiment, the at least one polymeric binder is cellulose; and the continuous composite surface B comprises between 1 and 60 wt% of pyrolytic carbon; preferably between 10 and 40 wt% of pyrolytic carbon; more preferably around 30 wt% of pyrolytic carbon.

Without being bound to any theory in particular, the authors of the present invention believe that the use of a preceramic polymer increases the strength, durability and resistance to high temperatures and oxidation of the continuous composite surface B of the present invention. Without being bound to any theory in particular, the authors of the present invention have observed that by infiltrating the nonwoven fabric with a solution comprising at least one preceramic polymer to obtain an infiltrated nonwoven fabric, followed by a stabilization step and optionally by a heating step said infiltrated the nonwoven fabric a continuous composite surface with improved mechanical properties and more resistance to oxidation is created.

In the present invention, the continuous composite surface B is obtainable by the method described above.

### Continuous composite surface

Any of the following particular embodiments directed to a continuous composite surface might be applied to the continuous composite surface A or to the continuous composite surface B.

In a more particular embodiment, the continuous composite surface A or B obtainable by the methods described above, has a thickness between 0.1 and 50 mm; preferably between 0.5 and 40 mm; more preferably between 1 and 20 mm; even more preferably between 2 and 10 mm.

In a more particular embodiment, the continuous composite surface A or B obtainable by the methods described above, is planar or tridimensional; preferably tridimensional (i. e. has a 3D shape). In a more particular embodiment, the continuous composite surface A or B obtainable by the methods described above, has a planar shape. In a more particular embodiment, the continuous composite surface obtainable by the methods described above, has a tridimensional shape; preferably a tridimensional shape selected from a curved shape, a cylindrical shape, a conic shape, a semi-cylindrical shape, a semi-spherical shape, and a bell-shape.

In a more particular embodiment, the continuous composite surface A or B obtainable by the methods described above, has a homogeneous ceramic fiber distribution.

In a more particular embodiment, the continuous composite surface A or B comprises ceramic fibers as a first filler, and a second filler; preferably wherein said ceramic fibers are in greater amount than the second filler; more preferably wherein said ceramic fibers are in greater weight percentage than the second filler. In a more particular embodiment, the continuous composite surface A or B comprises ceramic fibers as the major filler; preferably as the only filler.

In a more particular embodiment, the continuous composite surface A or B obtainable by the methods described above, has a ceramic fiber density of between 50 and 600 g/m², preferably of between 100 and 500 g/m², more preferably of between 150 and 450 g/m².

In a more particular embodiment, the continuous composite surface A or B, comprises at least 50 wt% of ceramic fibers; preferably at least 95 wt% of ceramic fibers of said continuous composite surface, more preferably at least 96 wt%; even more preferably at least 98 wt%.

Without being bound to any theory in particular, the authors of the present invention believe that the homogenous ceramic fiber distribution in the continuous composite surfaces A or B increase the strength, durability and resistance to high temperatures of the continuous composite surface of the present invention. It has been observed that the use of a preceramic polymer helps ceramic fibers to stick together by adhesion and/or cohesion.

In a particular embodiment, the continuous composite surface A of the present invention comprises ceramic fibers and a preceramic polymer; wherein the preceramic polymer is distributed homogeneously through all the thickness of the continuous composite surface A. The preceramic polymer comprised in the continuous composite surface A of the invention is generated from the preceramic polymer of the method of the invention. In a more particular embodiment, the continuous composite surface A described above, comprise a preceramic polymer; wherein said preceramic polymer is in a concentration of between 50 and 600 g/m², preferably of between 80 and 400 g/m², more preferably of between 100 and 300 g/m².

In a particular embodiment, the continuous composite surface B of the present invention comprises ceramic fibers and a ceramic binder; wherein the ceramic binder is distributed homogeneously through all the thickness of the continuous composite surface B. The ceramic binder comprised in the continuous composite surface B of the invention is generated from the preceramic polymer of the method of the invention. In a more particular embodiment, the continuous composite surface B described above, comprise a ceramic binder; wherein said ceramic binder is in a concentration of between 50 and 600 g/m², preferably of between 80 and 400 g/m², more preferably of between 100 and 300 g/m². In a more particular embodiment, the ceramic binder of the continuous composite surface B of the present invention is selected from silicon oxycarbide (SiOC), silicon carbonitride (SiCN) and silicon carbide (SiC); particularly silicon carbide. In a particular embodiment, the continuous composite surface B of the present invention comprise ceramic fibers and silicon carbide; wherein the silicon carbide is distributed homogeneously through all the thickness of the continuous composite surfaces.

In a particular embodiment, the continuous composite surfaces A or B of the present invention further comprise a carbonaceous residue. The carbonaceous residue may be left in the continuous composite surfaces by the at least one polymeric binder.

In a particular embodiment, the continuous composite surfaces A or B of the present invention are porous.

In a particular embodiment, the continuous composite surfaces A or B of the present invention have a uniform porosity among their surface. Said porosity is preferably between 40 and 99%, preferably of between 70 and 99%, more preferably of between 80 and 99%; even more preferably between 90 and 99 %.

In a more particular embodiment, the continuous composite surfaces A or B obtainable by the methods described above have a surface area of between 0,01 and 0,5 m²; preferably between 0,01 and 0,2 m²; more preferably between 0,01 and 0,05 m².

In a more particular embodiment, the continuous composite surfaces A or B obtainable by the methods described above further comprise one or more layers of additional coatings. Said one or more layers of additional coatings selected from a water repellant coating, a wash-coating, a catalytic coating and combinations thereof.

In a more particular embodiment, the continuous composite surfaces A or B obtainable by the methods described above further comprise one or more layers of additional coatings applied in one or more additional coating steps. Preferably, said layers of additional coatings are applied by dip coating, spray coating, vapor deposition and brush coating techniques.

In the context of the present invention the expression "water repellant coating" refers to a coating with a water repelling material. Non limiting examples of water repellant materials are polytetrafluoroethylene (PTFE) as those available from Dyneon LLC, Aston, PA.

In the context of the present invention the expression "wash-coatings" refers to a coating with a metal oxide and/or metal non-oxide materials in particulate or sol forms. The washcoat can be in the form of an aqueous or organic solvent slurry dispersion or as a aqueous or organic solvent-based solution over a range of viscosities and formulations. Non-limiting examples of useful wash-coats include water-based solutions of "ONDEO- 25 NALCO 1050", "ONDEO-NALCO 1042" or "ONDEO-NALCO 2329" silica (silicon oxide) sols, available from the ONDEO-NALCO Company, Naperville, IL. Other non -limiting examples of wash-coats are, for example, a mixture of a sol such as, but not limited to, "NALCO 1 050" silica sol in with (i) a metal-oxide or metal non-oxide powder, or (ii) a metal-oxide or metal non-oxide precursor sol, or (iii) a metal oxide or metal nonoxide dispersion. Such mixtures can be stirred, blended, or otherwise agitated to provide a solution or homogeneous dispersion. Non-limiting examples of metal oxides and metal non-oxides include, but are not limited to, aluminum oxide, zirconium oxide, silicon carbide, silicon oxide, titanium dioxide, and combinations thereof.

In an even more particular embodiment, the continuous composite surfaces A or B obtainable by the methods described above further comprise one or more layers of a catalytic coating. In the context of the present invention, the expression "catalytic coatings" refers to a coating of catalysts to assist in the reduction of pollutants such as NOx or CO in the exhaust from combustion. Non-limiting examples of catalytic coatings are catalyst precursors, catalytic materials or a combination thereof. Non limiting examples of catalytic materials suitable for the present invention include materials comprising metals such as platinum, palladium, rhodium, iron, nickel, silver, ruthenium, copper, gold, zirconium and combinations and alloys of these metals and compounds of these metals and metal oxides such as iron oxide, copper oxide, alkaline earth oxides, and alkaline earth aluminates, rare earth oxides, rare earth aluminates, cerium oxide, vanadium oxide, manganese oxide, cobalt oxide, zirconia, first row transition metal - rare earth oxide compounds and mixtures, oxides having perovskite and perovskite-related crystal structures, metal phosphates and phosphate- oxide mixtures, and NOx reduction catalysts (for example, rhodium supported on alumina, ceria, ceria-zirconia or alumina-ceria), and combinations thereof. The catalyst(s) may be present as particles of catalyst material(s) or catalyst material(s) on support particles, where the particles are adsorbed on the surface of the continuous composite surfaces A or B. In one embodiment, the catalytic metal or metal compound of the one or more layers of the catalytic coating may be applied as a metal salt solution. The metal salt may then be, for example, chemically altered (for example, chemically reduced) to the active metal form, or thermally decomposed to the active metal form, and adsorbed onto the continuous composite surface. In another embodiment, the catalytic metal or metal compound of the one or more layers of a catalytic coating may be applied to the continuous composite surface in the form of a colloidal dispersion or adsorbed on a colloidal carrier by dipping or other impregnation techniques. Catalytic metals or metal compounds may also be applied to the continuous composite surface by conventional gas phase deposition techniques.

### Burner surface

In another aspect, the present invention is directed to a burner surface obtainable by the method comprising the steps of
i) providing the continuous composite surface A as defined in any of the embodiments above or the continuous composite surface B as defined in any of the embodiments above; and
ii) perforating the continuous composite surface A or B to obtain a burner surface.

In a particular embodiment, the present invention is directed to a burner surface A or B obtainable by the method comprising the steps of
i) providing the continuous composite surface A as defined in any of the embodiments above or the continuous composite surface B as defined in any of the embodiments above; and
ii) perforating the continuous composite surface A or B to obtain a burner surface A or B.

Without being bound to any theory in particular, the authors of the present invention believe that the use of a burner surface comprising a continuous composite surface comprising ceramic fibers increases the strength, durability and resistance to high temperatures of the burner surface of the present invention. The authors of the present invention have observed that the use of a continuous composite surface comprising ceramic fibers and ceramic binder obtained from a preceramic polymer leads to a durable and resistant burner surface. In particular to an oxidation resistant burner surface.

In the context of the present invention the expression, "perforating the continuous composite surface" refers to making perforations, holes, openings, apertures and/or slits in the continuous composite surface.

Without being bound to any theory in particular, the authors of the present invention believe that when the perforations are created in the continuous composite surface to obtain a burner surface, said perforations do not disturb the distribution of the ceramic fibers and the porosity of said burner surface.

In a particular embodiment, the burner surface of the present invention is a gas boiler burner surface.

In a particular embodiment, the burner surface of the present invention is porous preferably having porosity values between 70 and 99 %, preferably between 80 and 99 %; more preferably between 90 and 99%.

Without being bound to any theory in particular, the authors of the present invention believe that when the porosity of the burner surface is over 70% the pressure loss in the burner surface is reduced.

In a particular embodiment, the burner surface of the present invention further comprises apertures; preferably at least 100 apertures; preferably at least 300 apertures; more preferably at least 800 apertures. The number or pattern of apertures in the burner surface of the present invention may be tailored to provide the desired efficiency for the application. In a more particular embodiment, the apertures of the burner surface of the present invention have a continuous diameter throughout its length. In a more particular embodiment, the apertures of the burner surface of the present invention are less than 60% of the volume of the burner surface; preferably less than 50%, more preferably less than 40%, even more preferably less than 30%. In a particular embodiment, the apertures of the burner surface of the present invention follow a pattern or a logo. For example, patterns or logos can be used to adjust the efficiency, change the pressure drop, and/or strengthen the burner surface without changing the overall size of the burner plate.

In the present invention, the burner surface is obtainable by the method described above that comprises a step (ii) of perforating the continuous composite surface to obtain a burner surface. In a particular embodiment, the perforation of step (ii) is performed by a perforation technique selected from laser, pins, die, punch, hydro jet and combinations thereof, preferably by a laser perforation technique. In a particular embodiment, the perforation of step (ii) is performed by means of a laser equipment; preferably by means of a punch laser machine; more preferably by means of a CO₂ punch laser machine. In a particular embodiment, the perforation of step (ii) is performed by using a software. A non-limiting example of software suitable for the present invention is Computer Aid Design (CAD).

In a particular embodiment, the burner surface of the present invention further comprises laser apertures; preferably laser apertures with diameters below 2 mm.

In a particular embodiment, the laser apertures of the burner surface of the present invention have a continuous diameter through their length.

In a particular embodiment, the laser apertures of the burner surface of the present invention have a larger diameter or opening near the top surface of the burner surface and a smaller diameter or opening near the bottom surface.

Without being bound to any theory in particular, the authors of the present invention believe that when said laser apertures have a larger diameter or opening near the top surface of the burner surface and a smaller diameter or opening near the bottom surface of the burner surface, during a combustion the flames are held closer to the top surface of the burner surface reducing the emissions generated during combustion. Without being bound to any theory in particular, the authors of the present invention believe that the presence of apertures help to held the flame and modulating the burner combustion at different burning conditions.

### Burner assembly

In another aspect, the present invention is directed to a burner assembly comprising
- a housing having a plenum chamber;
- a gas inlet port connected to the housing; and
- the burner surface as defined in any of the embodiments above.

In the context of the present invention the expressions "plenum chamber", "gas inlet port" have the meanings commonly known in the art.

In a particular embodiment, the burner assembly of the present invention is a radiant burner assembly.

In a particular embodiment, the burner assembly of the present invention is a blue flame burner assembly.

### Methods

In another aspect, the present invention is directed to a method for the preparation of the continuous composite surface A of the present invention, comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the preceramic polymer infiltrates the nonwoven fabric through all its thickness;
iv) heating the infiltrated nonwoven fabric obtained in step (iii) at a temperature high enough to stabilize the preceramic polymer to obtain a continuous composite surface.

In a particular embodiment, the method for the preparation of a continuous composite surface A of the present invention comprises the steps of:
i) providing a nonwoven layer comprising ceramic fibers and at least one polymeric binder; wherein the nonwoven layer has been obtained by pulp molding or by wet-laid techniques;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the preceramic polymer infiltrates the nonwoven fabric through all its thickness;
iv) heating the infiltrated nonwoven fabric obtained in step (iii) at a temperature high enough to stabilize the preceramic polymer to obtain a continuous composite surface.

In another aspect, the present invention is directed to a method for the preparation of the continuous composite surface B of the present invention, comprising the steps of:
i) providing the continuous composite surface A of the present invention; and
ii) heating the continuous composite surface A at a temperature of at least 300°C to obtain a continuous composite surface B.

The methods for the preparation of a continuous composite surfaces A and B of the present invention include all the particular embodiments described herein for the continuous composite surfaces A and B.

In another aspect, the present invention is directed to a method for the preparation of a burner surface comprising the steps of:
i) providing the continuous composite surface A or the continuous composite surface B as defined in any of the embodiments above; and
ii) perforating the continuous composite surface A or the continuous composite surface B to obtain a burner surface.

In a particular embodiment, the method for the preparation of a burner surface comprising the steps of:
i) providing the continuous composite surface A or the continuous composite surface B as defined in any of the embodiments above; and
ii) perforating the continuous composite surface A or the continuous composite surface B to obtain a burner surface A or B.

In the present invention, the burner surface A obtained from the continuous composite surface A by the method described above; which comprises a stabilized preceramic polymer may suffer a progressive heating process during its use as burner surface. In that way the preceramic polymer of the burner surface might be converted in a ceramic material during the burner surface use.

### Uses

In another aspect, the present invention is directed to the use of a burner surface as defined in any of the embodiments above in boilers, water heaters and/or cooking burners.

In another aspect, the present invention is directed to the use of a burner assembly as defined in any of the embodiments above in boilers, water heaters and/or cooking burners.

The burner surface, the burner assembly, the method for the preparation of a continuous composite surface, the method for the preparation of a burner surface, the use of a burner surface and the use of a burner assembly present all the advantages and characteristics as defined above for the continuous composite surfaces A or B of the present invention in any of its embodiments.

As used herein, the terms "about" or "around" means a slight variation of the value specified, preferably within 10 percent of the value specified. Nevertheless, the term "about" or the term "around" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximation due to the experimental and/or measurement conditions for such given value.

All the features described in this specification (including the claims, description and drawings) and/or all the steps of the described method can be combined in any possible combination, with the exception of combinations of such mutually exclusive features and/or steps. The invention will be further illustrated by means of examples which should not be interpreted as limiting the scope of the claims.

### EXAMPLES

The invention is illustrated by means of the following examples which in no case limit the scope of the invention.

### Example 1: Preparation of a continuous composite surface.

A continuous composite surface was prepared as follows.

Silicon carbide (SiC) ceramic fibers obtained under the trademark designation "NICALON SIC FIBER" from COI Ceramics Company were used. The SiC fibers were dispersed in water at a concentration of between 0.2 g/dm³ and 2 g/dm³ by applying mechanical energy using a disperser in an open vessel. Poly(vinyl alcohol)(PVA) was also added to the dispersion as a first binding agent at a 5 % in weight over the final weight of the nonwoven layer. Also, the viscosity of the dispersion was adjusted to a value between 50 cps and 1000 cps.

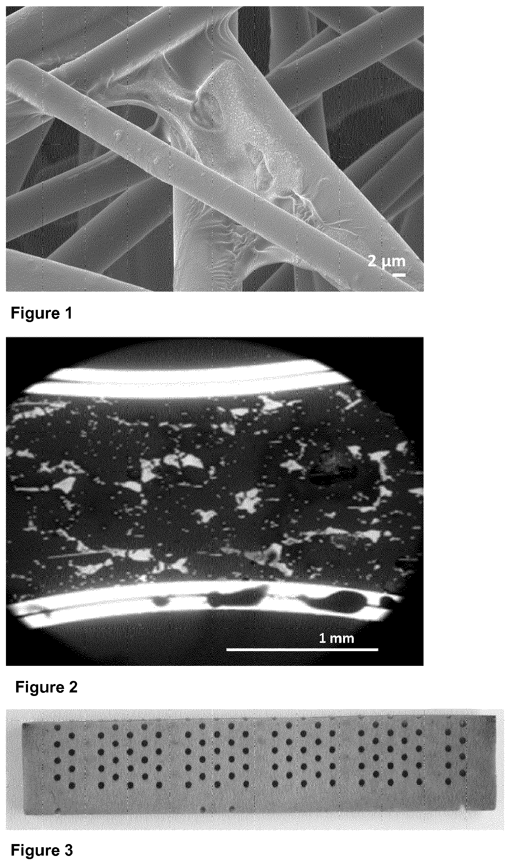

A pulp molding mold comprising two halves: a male half (convex) and a female half (concave), was used to create a nonwoven layer. The male half comprises perforations able for suctioning (Figure 1) and, optionally, a stainless steel mesh filter can be attached and fixed on its external surface. Neither the male nor the female halves used comprised protrusions and/or pins. Additionally, the pulp molding mold used can be adapted to create a flat or 3D shaped nonwoven layers with different shapes.

Then, a nonwoven layer comprising the ceramic fibers and PVA with a thickness between 1-10 mm was formed by suction dewatering the dispersion. Said nonwoven layer was formed on the external mold frame surface under a difference in pressure of between 5 mbar and 200 mbar bar during 20 seconds created by suction with a vacuum pump. The nonwoven layer was stabilized and dried under heating at a temperature between 50 and 100 °C to obtain a nonwoven fabric. Then, the nonwoven fabric was demolded by applying pressurized air.

The nonwoven fabric was then infiltrated by a preceramic polymer solution prepared as follows: A preceramic polymer (Cyclosilazanes, Durazane1800) was mixed with 3 wt.% of dicumyl peroxide and the mixture was then dissolved in a solvent. The mixture preceramic polymer and dicumyl peroxide was in the final solution in a wt% of between a 2 and a 18 wt.%. Fillers like silica (Aerosil R 812) or silicon carbide powder (Starceram S UF-25) were added in some of the mixtures in an amount of between 6 and 10 wt.% with respect of the final weight of the solution. When silicon carbide fillers were used, a dispersant were added to the solution. The preceramic coating solution was infiltrated on the nonwoven fabric by two techniques: 1) by curtain coating the nonwoven fabric in the preceramic solution coupled with a suction or 2) by spray coating coupled with a suction. A nonwoven fabric comprising the ceramic fibers was coated by curtain coating one side of the nonwoven fabric while applying suction on the other side with a vacuum pump. Then, an infiltrated nonwoven fabric was obtained.

A nonwoven fabric comprising the ceramic fibers was coated by spray coating one side or the two sizes of the nonwoven fabric while applying suction on the other side during 20 seconds created by suction with a vacuum pump. The spray coating is perform with a spraying robot using a spraying nozzle 80-00-67 and an airless spray gun (Krautzberger KAA 1300). Then, an infiltrated nonwoven fabric was obtained. The infiltrated nonwoven fabric was then dried in air at room temperature (about 25°C). Then, the infiltrated and dried nonwoven fabric was heated at about 110°C for 1 hour in air. Finally, the nonwoven fabric was heated at a temperature of about 500 °C for 1 hour in nitrogen and a continuous composite surface was obtained.

The continuous composite surface obtained comprised a carbonous residue from the PVA and was infiltrated with silicon carbide.The continuous composite surfaces obtained were characterized by scanning electronic microscopy (SEM). Figure 1 shows a scanning electron micrograph of a continuous composite surface wherein ceramic fibers were joined by silicon carbide. Surprisingly, it was observed that ceramic fibers were joined among them mostly at the crossing points of the fibers.

Figure 2 shows a scanning electron micrograph of a section of the whole thickness of a continuous composite surface wherein a homogenous distribution of silicon carbide through the thickness of the continuous composite surface can be observed.

### Example 2: Preparation of a burner surface.

Continuous composite surfaces prepared according to the procedures described in Example 1, were perforated by a laser punch machine (TruMatic model from Trumpf company) to obtain burner surfaces. Different aperture shapes and diameters, and complex patterns are able to be performed by laser perforation. The obtained burner surfaces showed an improved mechanical properties and stability overtime over burners of non-infiltrated continuous composite surfaces. In addition, less oxidation of the burner surface under working conditions was observed.

## Claims

1. A continuous composite surface A, obtainable by the method comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the solution comprising at least one preceramic polymer infiltrates the nonwoven fabric through all its thickness; and
iv) heating the infiltrated nonwoven fabric obtained in step (iii) at a temperature high enough to stabilize the preceramic polymer to obtain a continuous composite surface A.

2. The continuous composite surface A according to claim 1, wherein the nonwonven layer of step (i) is obtained by pulp molding or wet-laid technics.

3. The continuous composite surface A according to any of claims 1 or 2, wherein said preceramic polymer of step (iii) is a silazane preceramic polymer.

4. The continuous composite surface A according to any of claims 1 to 3, wherein said preceramic polymer of step (iii) is infiltrated into the nonwonven fabric by a deposition or impregnation technique coupled with a suction technique.

5. The continuous composite surface A according to any of claims 1 to 4, wherein said preceramic polymer of step (iii) infiltrates homogeneously the nonwoven fabric.

6. The continuous composite surface A according to any of claims 1 to 5, wherein the heating of step (ii) is performed at a temperature of between 50 and 300 °C; and the heating of step (iv) is performed at a temperature of between 50 and 300 °C.

7. A continuous composite surface B, obtainable by the method comprising the steps of
i) providing a continuous composite surface A as defined in any of claims 1 to 6; and
ii) heating the continuous composite surface A at a temperature of at least 300°C to obtain a continuous composite surface B.

8. The continuous composite surface A according to any of claims 1-6 or the continuous composite surface B according to claim 7 further comprising one or more layers of additional coatings selected from a water repellant coating, a wash coating, a catalytic coating and combinations thereof.

9. A burner surface obtainable by the method comprising the steps of
i) providing the continuous composite surface A as defined in any of claims 1-6 and 8 or the continuous composite surface B as defined in any of claims 7 or 8; and
ii) perforating said continuous composite surface A or B to obtain a burner surface.

10. The burner surface according to claim 9 wherein the perforation of step (ii) is performed by a laser perforation technique.

11. A burner assembly comprising
- a housing having a plenum chamber;
- a gas inlet port connected to the housing; and
- the burner surface as defined in any of claims 9 or 10.

12. A method for the preparation of a continuous composite surface A comprising the steps of:
i) providing a nonwoven layer comprising ceramic fibers and at least one polymeric binder;
ii) heating said nonwoven layer obtained in step (i) at a temperature high enough to stabilize said at least one polymeric binder from said nonwoven layer to obtain a nonwoven fabric;
iii) infiltrating the nonwoven fabric obtained in step (ii) with a solution comprising at least one preceramic polymer to obtain an infiltrated nonwoven fabric; wherein the preceramic polymer infiltrates the nonwoven fabric through all its thickness; and
iv) heating the infiltrated nonwoven fabric obtained in step (iii) at a temperature high enough to stabilize the preceramic polymer to obtain a continuous composite surface A.

13. A method for the preparation of a continuous composite surface B comprising the steps of:
i) providing the continuous composite surface A as defined in any of claims 1-6 and 8; and
ii) heating the continuous composite surface A at a temperature of at least 300°C to obtain a continuous composite surface B.

14. A method for the preparation of a burner surface comprising the steps of:
i) providing the continuous composite surface A as defined in any of claims 1-6 and 8 or the continuous composite surface B as defined in any of claims 7 or 8; and
ii) perforating said continuous composite surface A or B to obtain a burner surface.

15. The use of a burner surface as defined in any of claims 9 or 10 or of a burner assembly as defined in claim 11 in boilers, water heaters and/or cooking burners.
